# EUROPÄISCHE PATENTSCHRIFT

(11) **EP 3 426 419 B1**
(45) Veröffentlichungstag und Bekanntmachung des Hinweises auf die Patenterteilung: **13.10.2021**
(21) Anmeldenummer: 17717061.0
(22) Anmeldetag: 06.03.2017
(51) Int. Cl.: B21D 5/02, B21D 37/14

(54) **VERFAHREN ZUM GLEICHZEITIGEN VERSCHIEBEN VON ZUMINDEST ZWEI, IN EINER SCHIENE EINER WERKZEUGHALTERUNG GEHALTENEN BIEGEWERKZEUGEN UND BIEGEPRESSE**
METHOD FOR SIMULTANEOUSLY MOVING AT LEAST TWO BENDING TOOLS HELD IN A RAIL OF A TOOL HOLDER, AND BENDING PRESS
PROCÉDÉ PERMETTANT DE FAIRE COULISSER SIMULTANÉMENT AU MOINS DEUX OUTILS DE PLIAGE MAINTENUS DANS UN RAIL D'UN PORTE-OUTIL ET PRESSE DE PLIAGE

(30) Priorität: 07.03.2016 AT 501812016
(43) Veröffentlichungstag der Anmeldung: 16.01.2019
(73) Patentinhaber: TRUMPF Maschinen Austria GmbH & Co. KG., 4061 Pasching (AT)
(72) Erfinder: HELLER, Burkhard, 4060 Leonding (AT); LEUMÜLLER, Heinz, 4020 Linz (AT); NEDASHKIVSKYI, Volodymyr, 4030 Linz (AT); SPERRER, Gerhard, 4554 Oberschlierbach (AT)
(74) Vertreter: Burger, Hannes
(86) Internationale Anmeldenummer: PCT/AT2017/060057
(87) Internationale Veröffentlichungsnummer: WO 2017/152207

(56) Entgegenhaltungen:
- EP-A2- 0 310 145
- EP-A2- 0 894 550
- WO-A1-2015/077810
- JP-A- S61 103 626

## Beschreibung

Die Erfindung betrifft ein Verfahren zum gleichzeitigen Verschieben von zumindest zwei, in einer Schiene einer Werkzeughalterung gehaltenen Biegewerkzeugen, die entlang der Schiene eine Reihe bilden, mittels einer Transporteinrichtung, insbesondere ein Verfahren zum Beschicken einer Biegepresse mit Biegewerkzeugen und/oder zur Entnahme von Biegewerkzeugen aus einer Biegepresse. Die Erfindung bezieht sich auch auf eine Biegepresse und/oder Beschickungsvorrichtung zum Beschicken einer Biegepresse mit Biegewerkzeugen und/oder zum Auswechseln von Biegewerkzeugen und/oder zum Speichern von Biegewerkzeugen.

Während (z.B. beim Beschickungsprozess) das gleichzeitige Schieben von mehreren Biegewerkzeugen entlang einer länglichen Werkzeughalterung mittels einer Transporteinrichtung keine Schwierigkeiten bereitet, müssen die Biegewerkzeuge aus der Biegepresse einzeln entfernt werden, da die bislang bekannten Transporteinrichtungen nur an ein Biegewerkzeug ankoppelbar sind. Das angekoppelte Biegewerkzeug wird dann aus der Biegepresse gezogen. Die Schritte, Heranfahren der Transporteinrichtung, Ankoppeln an das Biegewerkzeug und Herausziehen des Biegewerkzeuges, müssen für jedes Biegewerkzeug gesondert durchgeführt werden. Dies stellt ein aufwendiges und zeitintensives Prozedere dar. Nachteilig ist auch, dass in einer (mit der Biegepresse) verbundenen Beschickungseinrichtung komplexe Rangiermanöver erforderlich sind, um die einzeln transportierten Biegewerkzeuge zu speichern. Dabei ist zu berücksichtigen, dass die Transporteinrichtung vielfach dieselbe Schiene als Führung nutzt und diese daher vor jedem Beschickungs- bzw. Entnahmevorgang freizuhalten ist.

Die WO 2015/077810 A1 offenbart ein Werkzeugrüstsystem für eine Biegepresse. Eine erste Manipulationsvorrichtung dient zum Verbringen des Biegewerkzeuges zwischen dem Werkzeugspeicher und Werkzeugaufnahmen. Eine zweite Manipulationsvorrichtung dient zum Positionieren des Biegewerkzeuges in der Werkzeugaufnahme. Die zweite Manipulationsvorrichtung umfasst ein über zwei Umlenkmittel geführtes Zugmittel, an dem ein Mitnehmerelement angeordnet ist. Das Biegewerkzeug weist einen Schlitz auf, durch den das Zugmittel, nicht aber das Mitnehmerelement durchführbar ist.

Die JPS61103626A offenbart eine Vorrichtung zum Verändern der Länge eines Formwerkzeuges für eine Biegemaschine. Dabei werden Formwerkzeugteile, die in einer T-förmigen Rille eines Balkens verschiebbar gelagert sind, aneinandergereiht. Dabei können Klauen, die mit einer Gewindestange zusammenwirken und durch eine Drehung der Gewindestange bewegt werden, in Ausnehmungen der einzelnen Formwerkzeugteile eingreifen und diese entlang des Balkens bewegen. Es sind zwei Klauen vorgesehen, die jeweils von entgegengesetzten Enden der Vorrichtung an das jeweilige Formwerkzeug bewegt werden. Eine der Klauen ist mit einem rechtsdrehenden Gewinde der Gewindestange verbunden, und die andere Klaue ist mit einem linksdrehenden Gewinde der Gewindestange verbunden.

Die Erfindung setzt sich zum Ziel, diese Nachteile zu beseitigen und ein Verfahren bereitzustellen, das ein gleichzeitiges Verschieben zumindest zweier Biegewerkzeuge durch Ziehen mittels der Transporteinrichtung ermöglicht. Der Aufwand bei der Beschickung bzw. Entnahme von Biegewerkzeugen soll dadurch deutlich reduziert werden. Das (Heraus)Ziehen der Biegewerkzeuge soll im Vergleich zu bekannten Lösungen zeitsparender gestaltet werden.

Diese Ziel wird mit einem eingangs erwähnten Verfahren dadurch erreicht, dass die Transporteinrichtung einen ersten Abschnitt und einen zweiten Abschnitt aufweist, wobei der zweite Abschnitt entlang der Schiene verfahrbar ist und wobei der erste Abschnitt relativ zum zweiten Abschnitt bewegbar ist, und dass die Transporteinrichtung in einer ersten Richtung entlang der Schiene an das erste Biegewerkzeug der Reihe herangefahren wird und der erste Abschnitt der Transporteinrichtung sich bis zum letzten Biegewerkzeug der Reihe erstreckend angeordnet und an das letzte Biegewerkzeug der Reihe angekoppelt wird und dass die Transporteinrichtung mit der Reihe aus Biegewerkzeugen in die zur ersten Richtung entgegengesetzte Richtung verfahren wird.

Das Verfahren der Transporteinrichtung in die zur ersten Richtung entgegengesetzte Richtung bedeutet, dass die Biegewerkzeuge durch die Transporteinrichtung gezogen werden. Dabei ist das letzte Biegewerkzeug an den ersten Abschnitt der Transporteinrichtung angekoppelt, wodurch die anderen Biegewerkzeuge der Reihe zwangsweise mitgezogen werden. Durch die erfindungsgemäße Maßnahme können mehrere Biegewerkzeuge gleichzeitig gezogen werden, wobei lediglich eine Ankopplung an das letzte Biegewerkzeug erforderlich ist. Die Erfindung geht mit einer Reduktion des (Verschiebe)Aufwandes sowie mit einer deutlichen Zeitersparnis einher.

Die erste Richtung entspricht jener Richtung, die (entlang der Schiene) vom ersten Biegewerkzeug der Reihe zum letzten Biegewerkzeug der Reihe weist. Die zur ersten Richtung entgegengesetzte Richtung entspricht jener Richtung, die (entlang der Schiene) vom letzten Biegewerkzeug der Reihe zum ersten Biegewerkzeug der Reihe weist.

Eine bevorzugte Ausführungsform zeichnet sich dadurch aus, dass die in der Schiene gehaltenen Biegewerkzeuge der Reihe jeweils zumindest einen in Längsrichtung der Schiene verlaufenden Durchgang, insbesondere eine Bohrung, aufweisen, wobei der erste Abschnitt der Transporteinrichtung durch die Durchgänge der Biegewerkzeuge der Reihe hindurch zumindest bis zum letzten Biegewerkzeug der Reihe verlegt wird. Die Durchgänge der einzelnen Biegewerkzeuge fluchten (zumindest teilweise) miteinander und bilden einen durchgehenden Gang, durch den der erste Abschnitt verlegt bzw. gefädelt wird. Die Durchgänge dienen daher als Führung für den ersten Abschnitt. Der erste Abschnitt kann dadurch auf elegante Weise entlang der Biegewerkzeug-Reihe verlegt werden, wobei die Durchgänge bzw. der durchgehende Gang eine Führung für den ersten Abschnitt darstellen. Gleichzeitig ist der erste Abschnitt während des Transports der Biegewerkzeuge vor äußeren Einflüssen geschützt.

Die Durchgänge, insbesondere Bohrungen, dienen der Gewichtsreduktion der Biegewerkzeuge und können daher bereits eingebracht sein. Mit obiger Ausführungsform erfüllen die Durchgänge neben einer Gewichtsreduktion zusätzlich die Funktion als Führung für den ersten Abschnitt der Transporteinrichtung.

In einer alternativen Ausführungsform könnte der erste Abschnitt der Transporteinrichtung auch neben den Biegewerkzeugen, d.h. außerhalb der Biegewerkzeuge, der Reihe verlegt werden und dann mit dem letzten Biegewerkzeug der Reihe verbunden werden.

Eine bevorzugte Ausführungsform zeichnet sich dadurch aus, dass der erste Abschnitt der Transporteinrichtung ein längliches, vorzugsweise flexibles Zugübertragungsmittel umfasst. Ein längliches Übertragungsmittel ist nicht nur besonders platzsparend, sondern kann auch einfach in die Durchgänge der Biegewerkzeuge eingeführt werden.

Eine bevorzugte Ausführungsform zeichnet sich dadurch aus, dass der erste Abschnitt der Transporteinrichtung eine vorzugsweise durch einen Antrieb betätigbare Kupplungseinrichtung umfasst, mit der das letzte Biegewerkzeug der Reihe an die Transporteinrichtung angekoppelt wird, wobei die Kupplungseinrichtung vorzugsweise eine Spreizeinrichtung und/oder eine Klemmeinrichtung und/oder eine Mitnehmereinrichtung umfasst. Der Antrieb der Kupplungseinrichtung kann z.B. in einem als Shuttle ausgebildeten zweiten Abschnitt der Transporteinrichtung untergebracht sein.

Eine bevorzugte Ausführungsform zeichnet sich dadurch aus, dass der erste Abschnitt der Transporteinrichtung zwei, entlang ihrer Längserstreckung gegeneinander verschiebbare Zug- und/oder Druckübertragungselemente aufweist, wobei die Kupplungseinrichtung durch ein gegeneinander Verschieben der Zug- und/oder Druckübertragungselemente betätigt wird. Das Betätigen der Kupplungseinrichtung kann dabei von anderer Stelle aus erfolgen, z.B. von dem - in weitere Folge - beschriebenen zweiten Abschnitt (z.B. Shuttle) der Transporteinrichtung.

Eine bevorzugte Ausführungsform zeichnet sich dadurch aus, dass die Transporteinrichtung in derselben Schiene geführt wird, in der die Biegewerkzeuge gehalten sind.

Gemäß der Erfindung weist die Transporteinrichtung einen entlang der Schiene verfahrbaren zweiten Abschnitt, insbesondere ein Shuttle, auf und ist der erste Abschnitt relativ zum zweiten Abschnitt bewegbar, vorzugsweise von dem zweiten Abschnitt ausfahrbar, insbesondere ausrollbar. Der zweite Abschnitt wird bis maximal zum ersten Biegewerkzeug herangefahren (d.h. der zweite Abschnitt verbleibt außerhalb der Biegewerkzeuge). Anschließend wird der erste Abschnitt ausgefahren und damit entlang der Biegewerkzeuge positioniert.

Eine bevorzugte Ausführungsform zeichnet sich dadurch aus, dass der zweite Abschnitt der Transporteinrichtung ein Gehäuse umfasst, in dem der erste Abschnitt unterbringbar ist, insbesondere während des Heranfahrens der Transporteinrichtung an das erste Biegewerkzeug der Reihe. Dadurch bleibt der gegebenenfalls filigranere erste Abschnitt geschützt. Außerdem kann der erste Abschnitt durch entsprechende Führungen gezielt im Bereich der Durchgänge ausgefahren werden, sodass ein zuverlässiges ,Einfädeln' erfolgt.

Das Ziel wird auch erreicht mit einer Beschickungsvorrichtung zum Beschicken einer Biegepresse mit Biegewerkzeugen und/oder zum Auswechseln von Biegewerkzeugen und/oder zum Speichern von Biegewerkzeugen, mit einer als Schiene ausgebildeten Werkzeughalterung und einer entlang der Schiene verfahrbaren Transporteinrichtung. Dabei weist die Transporteinrichtung einen ersten Abschnitt, der entlang einer Reihe von in derselben Schiene gehaltenen Biegewerkzeugen anordenbar ist, und einen entlang der Schiene verfahrbaren zweiten Abschnitt auf, wobei der erste Abschnitt relativ zum zweiten Abschnitt bewegbar ist. Der Ausdruck "entlang einer Reihe von Biegewerkzeugen" ist dahingehend zu verstehen, dass er sowohl eine Anordnung des ersten Abschnittes innerhalb der Biegewerkzeuge (in Durchgängen), als auch eine Anordnung des ersten Abschnittes außen neben den Biegewerkzeugen umfasst.

Eine bevorzugte Ausführungsform zeichnet sich dadurch aus, dass die Beschickungsvorrichtung zur Durchführung eines erfindungsgemäßen Verfahrens ausgebildet ist.

Eine bevorzugte Ausführungsform zeichnet sich dadurch aus, dass die Beschickungsvorrichtung zumindest zwei, in der Schiene gehaltene Biegewerkzeuge umfasst, die entlang der Schiene eine Reihe bilden und jeweils zumindest einen in Längsrichtung der Schiene verlaufenden Durchgang, insbesondere eine Bohrung, aufweisen, wobei die Durchgänge der Biegewerkzeuge miteinander fluchten, und dass der erste Abschnitt der Transporteinrichtung durch die Durchgänge der Biegewerkzeuge der Reihe hindurch verlegbar ist.

Eine bevorzugte Ausführungsform zeichnet sich dadurch aus, dass der erste Abschnitt der Transporteinrichtung ein längliches, vorzugsweise flexibles Zugübertragungsmittel umfasst.

Eine bevorzugte Ausführungsform zeichnet sich dadurch aus, dass der erste Abschnitt der Transporteinrichtung eine vorzugsweise durch einen Antrieb betätigbare Kupplungseinrichtung zum Ankoppeln an ein Biegewerkzeug umfasst, wobei die Kupplungseinrichtung vorzugsweise eine Spreizeinrichtung und/oder Klemmeinrichtung und/oder Mitnehmereinrichtung umfasst.

Eine bevorzugte Ausführungsform zeichnet sich dadurch aus, dass der erste Abschnitt der Transporteinrichtung zwei, entlang ihrer Längserstreckung gegeneinander verschiebbare Zug- und/oder Druckübertragungselemente aufweist, durch die die Kupplungseinrichtung betätigbar ist.

Gemäß der Erfindung weist die Transporteinrichtung einen entlang der Schiene verfahrbaren zweiten Abschnitt, insbesondere ein Shuttle, auf und ist der erste Abschnitt relativ zum zweiten Abschnitt bewegbar, vorzugsweise von dem zweiten Abschnitt ausfahrbar, insbesondere ausrollbar.

Eine bevorzugte Ausführungsform zeichnet sich dadurch aus, dass der zweite Abschnitt der Transporteinrichtung ein Gehäuse umfasst, in dem der erste Abschnitt der Transporteinrichtung unterbringbar ist.

Das Ziel wird auch erreicht mit einer Biegepresse mit einer als Schiene ausgebildeten Werkzeughalterung und einer entlang der Schiene verfahrbaren Transporteinrichtung. Dabei weist die Transporteinrichtung einen ersten Abschnitt, der entlang einer Reihe von in derselben Schiene gehaltenen Biegewerkzeugen anordenbar ist, und einen entlang der Schiene verfahrbaren zweiten Abschnitt auf, wobei der erste Abschnitt relativ zum zweiten Abschnitt bewegbar ist.

Eine bevorzugte Ausführungsform zeichnet sich dadurch aus, dass die Biegepresse zur Durchführung eines erfindungsgemäßen Verfahrens ausgebildet ist.

Zum besseren Verständnis der Erfindung wird diese anhand der nachfolgenden Figuren näher erläutert.

Es zeigen jeweils in stark vereinfachter, schematischer Darstellung:
- Fig. 1: eine Transporteinrichtung, die erfindungsgemäß an eine Reihe von Biegewerkzeugen angekoppelt ist;
- Fig. 2: eine Ausführungsform eines ersten Abschnittes einer Transporteinrichtung;
- Fig. 3: eine Ausführungsform eines ersten Abschnittes einer Transporteinrichtung;
- Fig. 4: ein Biegewerkzeug im Schnitt;
- Fig. 5: eine Biegepresse und eine Beschickungsvorrichtung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Die Ausführungsbeispiele zeigen mögliche Ausführungsvarianten der Erfindung, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Die den eigenständigen erfinderischen Lösungen zugrundeliegende Aufgabe kann der Beschreibung entnommen werden.

Vor allem können die einzelnen Figuren gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

Der Ordnung halber sei abschließend darauf hingewiesen, dass zum besseren Verständnis des Aufbaus der Biegepresse, Beschickungseinrichtung und Transporteinrichtung diese bzw. deren Bestandteile teilweise unmaßstäblich und/oder vergrößert und/oder verkleinert dargestellt wurden.

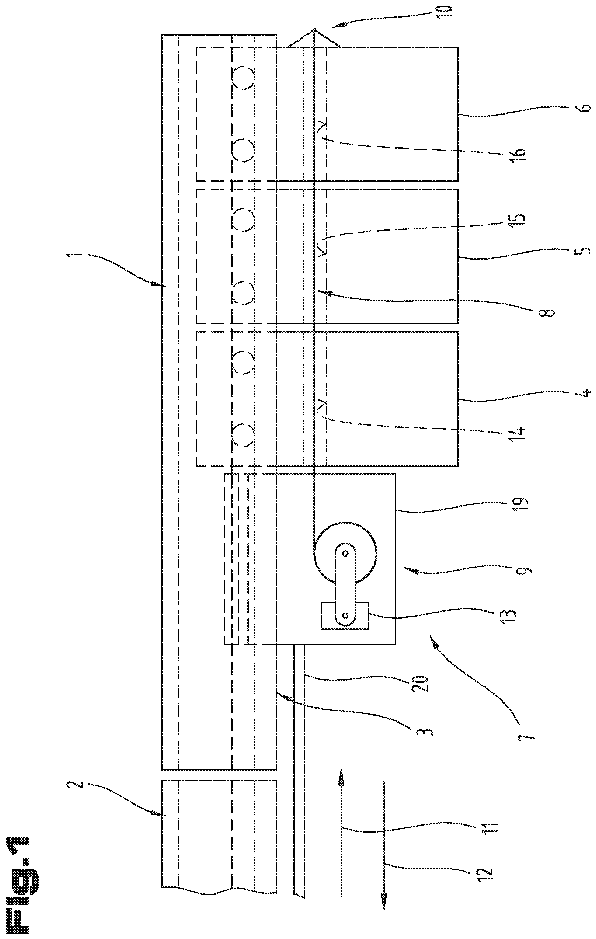

Anhand der in Fig. 1 dargestellten Abschnitte einer Biegepresse 1 und einer Beschickungsvorrichtung 2 wird das erfindungsgemäße Verfahren näher erläutert. Dabei handelt es sich um ein Verfahren zum gleichzeitigen Verschieben von zumindest zwei, in einer Schiene 3 einer Werkzeughalterung gehaltenen Biegewerkzeugen 4, 5, 6.

In der dargestellten Ausführungsform werden drei Biegewerkzeuge 4, 5, 6, die entlang der Schiene 3 eine Reihe bilden, mittels einer Transporteinrichtung 7 verschoben. Bei dem Verfahren kann es sich z.B. um eine Beschickung der Biegepresse 1 mit Biegewerkzeugen 4, 5, 6 und/oder um die Entnahme von Biegewerkzeugen 4, 5, 6 aus der Biegepresse 1 handeln.

In einem ersten Schritt wird die Transporteinrichtung 7 in einer ersten Richtung 11 entlang der Schiene 3 an das erste Biegewerkzeug 4 der Reihe herangefahren. Anschließend wird ein erster Abschnitt 8 der Transporteinrichtung 7 derart angeordnet, dass er sich bis zum letzten Biegewerkzeug 6 der Reihe erstreckt. Mit anderen Worten: der erste Abschnitt 8 wird entlang einer Reihe von in derselben Schiene 3 gehaltenen Biegewerkzeugen 4, 5, 6 angeordnet.

Dann wird der erste Abschnitt 8 an das letzte Biegewerkzeug 6 der Reihe angekoppelt. Jetzt kann die Transporteinrichtung 7 mit der Reihe aus Biegewerkzeugen 4, 5, 6 in die zur ersten Richtung 11 entgegengesetzte Richtung 12 verfahren werden. In der dargestellten Ausführungsform werden so die Biegewerkzeuge aus der Biegepresse 1 in Richtung Beschickungsvorrichtung 2 gezogen.

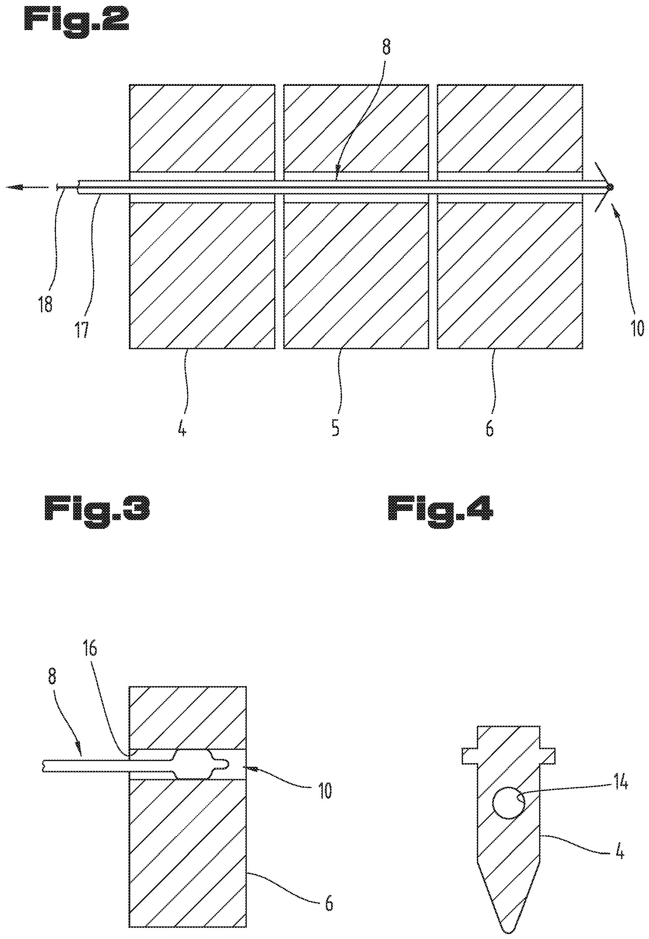

In der dargestellten Ausführungsform weisen die in der Schiene 3 gehaltenen Biegewerkzeuge 4, 5, 6 der Reihe jeweils zumindest einen in Längsrichtung der Schiene 3 verlaufenden Durchgang 14, 15, 16, insbesondere eine Bohrung, auf. Die Durchgänge 14, 15, 16 fluchten miteinander und bilden einen entlang der Reihe von Biegewerkzeugen 4, 5, 6 durchgehenden Gang. Der erste Abschnitt 8 der Transporteinrichtung 7 wird durch die Durchgänge 14, 15, 16 der Biegewerkzeuge 4, 5, 6 der Reihe hindurch zumindest bis zum letzten Biegewerkzeug 6 der Reihe (hier: bis in den Bereich des Endes des letzten Biegewerkzeuges 6) verlegt. Fig. 4 zeigt ein Biegewerkzeug 4 mit einem Durchgang 14 im Schnitt.

Der erste Abschnitt 8 der Transporteinrichtung 7 umfasst ein längliches, vorzugsweise flexibles Zugübertragungsmittel, dass durch die Durchgänge 14, 15, 16 ,gefädelt' wird.

Der erste Abschnitt 8 der Transporteinrichtung 7 umfasst in seinem Endbereich eine (vorzugsweise durch einen Antrieb) betätigbare Kupplungseinrichtung 10, mit der das letzte Biegewerkzeug 6 der Reihe an die Transporteinrichtung 7 angekoppelt wird. Der (nicht dargestellte) Antrieb der Kupplungseinrichtung 10 kann z.B. in dem als Shuttle ausgebildeten zweiten Abschnitt 8 der Transporteinrichtung 7 untergebracht sein. Die Kupplungseinrichtung 10 aus Fig. 1 und 2 ist in Art einer Mitnehmereinrichtung ausgebildet. Alternativ kann die Kupplungseinrichtung auch eine Spreizeinrichtung (Fig. 3) und/oder eine Klemmeinrichtung umfassen.

Wie in der Ausführungsform der Fig. 2 näher dargestellt kann der erste Abschnitt 8 der Transporteinrichtung 7 zwei, entlang ihrer Längserstreckung gegeneinander verschiebbare Zug- und/oder Druckübertragungselemente 17, 18 aufweisen. Dabei kann ein Übertragungselement 17 als (schlauch- oder rohrförmige) Umhüllung ausgebildet sein, während das andere (seil- oder kettenförmige) Übertragungselement 18 innerhalb der Umhüllung verläuft. Die Kupplungseinrichtung 10, die hier ausschwenkbare Mitnehmer umfasst, kann durch ein gegeneinander Verschieben der Zug- und/oder Druckübertragungselemente 17, 18 betätigt werden. Dabei kann z.B. dass Übertragungselement 18 relativ zum Übertragungselement 17 entlang des in Fig. 2 dargestellten Pfeiles bewegt werden, wodurch die Mitnehmer der Kupplungseinrichtung 10 ausgeschwenkt werden.

Fig. 3 zeigt eine weitere Variante einer Kupplungseinrichtung 10. Durch Aufblasen eines Ballons innerhalb des Durchganges 16 des letzten Biegewerkzeuges 6 wird eine kraftschlüssige Verbindung hergestellt. Der Ballon ist im Endbereich des ersten Abschnittes 8 ausgebildet und drückt gegen die Innenwände des Durchganges 16. Anstelle eines aufblasbaren Ballons können auch andere Spreiz- oder Klemmeinrichtungen als Kupplungseinrichtungen zur Anwendung kommen.

Aus Fig. 1 ist ersichtlich, dass die Transporteinrichtung 7 in derselben Schiene 3 geführt wird, in der die Biegewerkzeuge 4, 5, 6 gehalten sind. Die Transporteinrichtung 7 weist einen entlang der Schiene 3 verfahrbaren zweiten Abschnitt 9 auf, insbesondere in Form eines Shuttles. Der erste Abschnitt 8 ist relativ zum zweiten Abschnitt 9 bewegbar bzw. von dem zweiten Abschnitt 9 ausfahrbar (hier: ausrollbar). Dadurch gelangt der erste Abschnitt 8 in die Durchgänge 14, 15, 16 und durchsetzt diese.

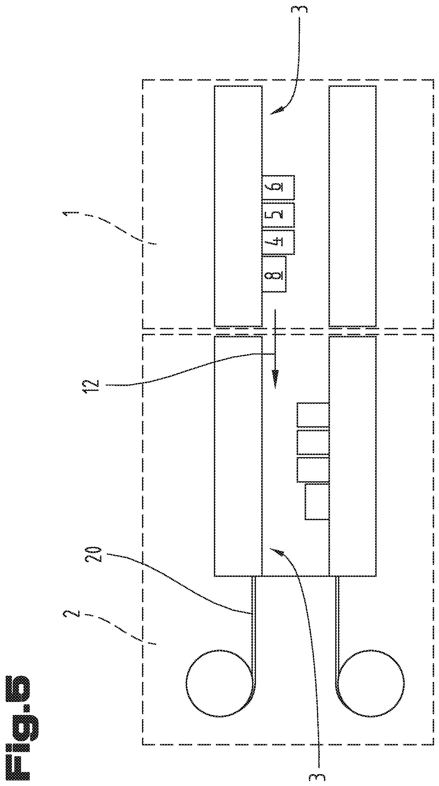

Der in Form eines Shuttles ausgebildete zweite Abschnitt 9 der Transporteinrichtung 7 wird mittels eine länglichen Zug/Druckübertragungsmittel 20, insbesondere einer Transportkette entlang der Schiene 3 verfahren. Das Zug/Druckübertragungsmittel 20 kann als Kette, Seil, od. dgl. ausgebildet sein und wird durch einen Antrieb (in Fig. 5 als Rollen angedeutet) bewegt. Das Zug/Druckübertragungsmittel 20 kann selbst in der Schiene 3 geführt sein.

Der zweite Abschnitt 9 der Transporteinrichtung 7 kann ein Gehäuse 19 umfassen, in dem der erste Abschnitt 8 - in der eingefahrenen Stellung - untergebracht ist. Dies ist insbesondere während des Heranfahrens der Transporteinrichtung 7 an das erste Biegewerkzeug 4 der Reihe der Fall.

Fig. 5 zeigt schließlich eine Biegepresse 1 und eine an die Biegepresse 1 angekoppelte Beschickungsvorrichtung 2 zum Beschicken der Biegepresse 1 mit Biegewerkzeugen 4, 5, 6 und/oder zum Auswechseln von Biegewerkzeugen 4, 5, 6 und/oder zum Speichern von Biegewerkzeugen 4, 5, 6. Diese sind jeweils zur Durchführung eines erfindungsgemäßen Verfahrens ausgebildet.

Wie aus Fig. 5 ersichtlich kann das erfindungsgemäße Prinzip sowohl für Unterwerkzeuge als auch für Oberwerkzeuge angewendet werden.

### Bezugszeichenaufstellung

- 1: Biegepresse
- 2: Beschickungsvorrichtung
- 3: Schiene
- 4: Biegewerkzeug
- 5: Biegewerkzeug
- 6: Biegewerkzeug
- 7: Transporteinrichtung
- 8: erster Abschnitt der Transporteinrichtung
- 9: zweiter Abschnitt der Transporteinrichtung
- 10: Kupplungseinrichtung
- 11: erste Richtung
- 12: zweite Richtung
- 13: Antrieb
- 14: Durchgang
- 15: Durchgang
- 16: Durchgang
- 17: Zug- und/oder Druckübertragungsmittel
- 18: Zug- und/oder Druckübertragungsmittel
- 19: Gehäuse
- 20: Zug- und/oder Druckübertragungsmittel

## Patentansprüche

1. Verfahren zum gleichzeitigen Verschieben von zumindest zwei, in einer Schiene (3) einer Werkzeughalterung gehaltenen Biegewerkzeugen (4, 5, 6), die entlang der Schiene (3) eine Reihe bilden, mittels einer Transporteinrichtung (7), **dadurch gekennzeichnet, dass** die Transporteinrichtung (7) einen ersten Abschnitt (8) und einen zweiten Abschnitt (9) aufweist, wobei der zweite Abschnitt (9) entlang der Schiene (3) verfahrbar ist und wobei der erste Abschnitt (8) relativ zum zweiten Abschnitt (9) bewegbar ist, und dass die Transporteinrichtung (7) in einer ersten Richtung (11) entlang der Schiene (3) an das erste Biegewerkzeug (4) der Reihe herangefahren wird und der erste Abschnitt (8) der Transporteinrichtung (7) sich bis zum letzten Biegewerkzeug (6) der Reihe erstreckend angeordnet und an das letzte Biegewerkzeug (6) der Reihe angekoppelt wird und dass die Transporteinrichtung (7) mit der Reihe aus Biegewerkzeugen (4, 5, 6) in die zur ersten Richtung (11) entgegengesetzte Richtung (12) verfahren wird.

2. Verfahren nach Anspruch 1, **dadurch gekennzeichnet, dass** die in der Schiene (3) gehaltenen Biegewerkzeuge (4, 5, 6) der Reihe jeweils zumindest einen in Längsrichtung der Schiene (3) verlaufenden Durchgang (14, 15, 16), insbesondere eine Bohrung, aufweisen, wobei der erste Abschnitt (8) der Transporteinrichtung (7) durch die Durchgänge (14, 15, 16) der Biegewerkzeuge (4, 5, 6) der Reihe hindurch zumindest bis zum letzten Biegewerkzeug (6) der Reihe verlegt wird.

3. Verfahren nach Anspruch 1 oder 2, **dadurch gekennzeichnet, dass** der erste Abschnitt (8) der Transporteinrichtung (7) ein längliches, vorzugsweise flexibles Zugübertragungsmittel umfasst.

4. Verfahren nach einem der vorhergehenden Ansprüche, **dadurch gekennzeichnet, dass** der erste Abschnitt (8) der Transporteinrichtung (7) eine vorzugsweise durch einen Antrieb betätigbare Kupplungseinrichtung (10) umfasst, mit der das letzte Biegewerkzeug (6) der Reihe an die Transporteinrichtung (7) angekoppelt wird, wobei die Kupplungseinrichtung (10) vorzugsweise eine Spreizeinrichtung und/oder eine Klemmeinrichtung und/oder eine Mitnehmereinrichtung umfasst.

5. Verfahren nach einem der vorhergehenden Ansprüche, **dadurch gekennzeichnet, dass** der erste Abschnitt (8) der Transporteinrichtung (7) zwei, entlang ihrer Längserstreckung gegeneinander verschiebbare Zug- und/oder Druckübertragungselemente (17, 18) aufweist, wobei die Kupplungseinrichtung (10) durch ein gegeneinander Verschieben der Zug- und/oder Druckübertragungselemente (17, 18) betätigt wird.

6. Verfahren nach einem der vorhergehenden Ansprüche, **dadurch gekennzeichnet, dass** die Transporteinrichtung (7) in derselben Schiene (3) geführt wird, in der die Biegewerkzeuge (4, 5, 6) gehalten sind.

7. Verfahren nach einem der vorhergehenden Ansprüche, **dadurch gekennzeichnet, dass** der zweite Abschnitt (9) bis maximal zum ersten Biegewerkzeug (4) herangefahren wird, wobei der zweite Abschnitt (9) außerhalb der Biegewerkzeuge (4, 5, 6) verbleibt, und dass anschließend der erste Abschnitt (8) ausgefahren und damit entlang der Biegewerkzeuge (4, 5, 6) positioniert wird.

8. Verfahren nach einem der vorhergehenden Ansprüche, **dadurch gekennzeichnet, dass** der zweite Abschnitt (9) der Transporteinrichtung (7) in Form eines Shuttles ausgebildet ist und mittels einem länglichen Zug/Druckübertragungsmittel (20), insbesondere einer Transportkette, entlang der Schiene (3) verfahren wird.

9. Verfahren nach einem der vorhergehenden Ansprüche, **dadurch gekennzeichnet, dass** der zweite Abschnitt (9) der Transporteinrichtung (7) ein Gehäuse (19) umfasst, in dem der erste Abschnitt (8) unterbringbar ist, insbesondere während des Heranfahrens der Transporteinrichtung (7) an das erste Biegewerkzeug (4) der Reihe.

10. Verfahren nach einem der vorhergehenden Ansprüche, **dadurch gekennzeichnet, dass** mit dem Verfahren eine Biegepresse (1) mit Biegewerkzeugen (4, 5, 6) beschickt wird und/oder Biegewerkzeuge (4, 5, 6) aus einer Biegepresse (1) entnommen werden.

11. Verfahren nach einem der vorhergehenden Ansprüche, **dadurch gekennzeichnet, dass** der erste Abschnitt (8) von dem zweiten Abschnitt (9) ausfahrbar, vorzugsweise ausrollbar, ist.

12. Beschickungsvorrichtung (2) zum Beschicken einer Biegepresse (1) mit Biegewerkzeugen (4, 5, 6) und/oder zum Auswechseln von Biegewerkzeugen (4, 5, 6) und/oder zum Speichern von Biegewerkzeugen (4, 5, 6), mit einer als Schiene (3) ausgebildeten Werkzeughalterung und einer entlang der Schiene (3) verfahrbaren Transporteinrichtung (7), **dadurch gekennzeichnet, dass** die Transporteinrichtung (7) einen ersten Abschnitt (8), der entlang einer Reihe von in derselben Schiene (3) gehaltenen Biegewerkzeugen (4, 5, 6) anordenbar ist, und einen entlang der Schiene (3) verfahrbaren zweiten Abschnitt (9) aufweist, wobei erste Abschnitt (8) relativ zum zweiten Abschnitt (9) bewegbar ist.

13. Beschickungsvorrichtung nach Anspruch 12, **dadurch gekennzeichnet, dass** die Beschickungsvorrichtung (2) zur Durchführung eines Verfahrens nach einem der Ansprüche 1 bis 11 ausgebildet ist.

14. Beschickungsvorrichtung nach Anspruch 12 oder 13, **dadurch gekennzeichnet, dass** die Beschickungsvorrichtung (2) zumindest zwei, in der Schiene (3) gehaltene Biegewerkzeuge (4, 5, 6) umfasst, die entlang der Schiene (3) eine Reihe bilden und jeweils zumindest einen in Längsrichtung der Schiene (3) verlaufenden Durchgang (14, 15, 16), insbesondere eine Bohrung, aufweisen, wobei die Durchgänge (14, 15, 16) der Biegewerkzeuge (4, 5, 6) miteinander fluchten, und dass der erste Abschnitt (8) der Transporteinrichtung (7) durch die Durchgänge (14, 15, 16) der Biegewerkzeuge (4, 5, 6) der Reihe hindurch verlegbar ist.

15. Beschickungsvorrichtung nach einem der Ansprüche 12 bis 14, **dadurch gekennzeichnet, dass** der erste Abschnitt (8) der Transporteinrichtung (7) ein längliches, vorzugsweise flexibles Zugübertragungsmittel umfasst.

16. Beschickungsvorrichtung nach einem der Ansprüche 12 bis 15, **dadurch gekennzeichnet, dass** der erste Abschnitt (8) der Transporteinrichtung (7) eine vorzugsweise durch einen Antrieb betätigbare Kupplungseinrichtung (10) zum Ankoppeln an ein Biegewerkzeug (6) umfasst, wobei die Kupplungseinrichtung (10) vorzugsweise eine Spreizeinrichtung und/oder Klemmeinrichtung und/oder Mitnehmereinrichtung umfasst.

17. Beschickungsvorrichtung nach Anspruch 16, **dadurch gekennzeichnet, dass** der erste Abschnitt (8) der Transporteinrichtung (7) zwei, entlang ihrer Längserstreckung gegeneinander verschiebbare Zug- und/oder Druckübertragungselemente (17, 18) aufweist, durch die die Kupplungseinrichtung (10) betätigbar ist.

18. Beschickungsvorrichtung nach einem der Ansprüche 12 bis 17, **dadurch gekennzeichnet, dass** der zweite Abschnitt (9) der Transporteinrichtung (7) in Form eines Shuttles ausgebildet ist und mittels eines länglichen Zug/Druckübertragungsmittels (20), insbesondere einer Transportkette, entlang der Schiene (3) verfahrbar ist.

19. Beschickungsvorrichtung nach einem der Ansprüche 12 bis 18, **dadurch gekennzeichnet, dass** der zweite Abschnitt (9) der Transporteinrichtung (7) ein Gehäuse (19) umfasst, in dem der erste Abschnitt (8) der Transporteinrichtung (17) unterbringbar ist.

20. Beschickungsvorrichtung nach einem der Ansprüche 12 bis 19, **dadurch gekennzeichnet, dass** der erste Abschnitt (8) von dem zweiten Abschnitt (9) ausfahrbar, vorzugsweise ausrollbar, ist.

21. Biegepresse (1) mit einer als Schiene (3) ausgebildeten Werkzeughalterung und einer entlang der Schiene (3) verfahrbaren Transporteinrichtung (7), **dadurch gekennzeichnet, dass** die Transporteinrichtung (7) einen ersten Abschnitt (8), der entlang einer Reihe von in derselben Schiene (3) gehaltenen Biegewerkzeugen (4, 5, 6) anordenbar ist, und einen entlang der Schiene (3) verfahrbaren zweiten Abschnitt (9) aufweist, wobei erste Abschnitt (8) relativ zum zweiten Abschnitt (9) bewegbar ist.

22. Biegepresse nach Anspruch 21, **dadurch gekennzeichnet, dass** die Biegepresse (1) zur Durchführung eines Verfahrens nach einem der Ansprüche 1 bis 11 ausgebildet ist.

## Claims

1. A method for simultaneously displacing, by means of a transport device (7), at least two bending tools (4, 5, 6) held in a rail (3) of a tool mount, which bending tools (4, 5, 6) form a row along the rail (3), **characterized in that** the transport device (7) has a first section (8) and a second section (9), wherein the second section (9) is displaceable along the rail (3), and wherein the first section (8) is movable relative to the second section (9), and that the transport device (7) is moved in a first direction (11) along the rails (3) up to the first bending tool (4) of the row, and the first section (8) of the transport device (7) is arranged so as to extend up to the last bending tool (6) of the row and is coupled to the last bending tool (6) of the row, and that the transport device (7) is displaced with the row of bending tools (4, 5, 6) in the direction (12) opposite to the first direction (11).

2. The method according to claim 1, **characterized in that** the bending tools (4, 5, 6) of the row held in the rail (3) each have at least one passage (14, 15, 16), in particular a bore, extending in the longitudinal direction of the rail (3), wherein the first section (8) of the transport device (7) is laid through the passages (14, 15, 16) of the bending tools (4, 5, 6) of the row at least up to the last bending tool (6) of the row.

3. The method according to claim 1 or 2, **characterized in that** the first section (8) of the transport device (7) comprises an oblong, preferably flexible pull transfer means.

4. The method according to one of the preceding claims, **characterized in that** the first section (8) of the transport device (7) comprises a coupling device (10) preferably actuatable by a drive, by means of which coupling device (10) the last bending tool (6) of the row is coupled to the transport device (7), wherein the coupling device (10) preferably comprises a spreader device and/or a clamping device and/or a driver device.

5. The method according to one of the preceding claims, **characterized in that** the first section (8) of the transport device (7) has two pull and/or push transfer elements (17, 18) displaceable against one another along their longitudinal extension, wherein the coupling device (10) is actuated by means of displacing the pull and/or push transfer elements (17, 18) against one another.

6. The method according to one of the preceding claims, **characterized in that** the transport device (7) is guided in the same rail (3), in which the bending tools (4, 5, 6) are held.

7. The method according to one of the preceding claims, **characterized in that** the second section (9) is moved maximally to the first bending tool (4), wherein the second section (9) remains outside the bending tools (4, 5, 6), and that subsequently, the first section (8) is extended and thus positioned along the bending tools (4, 5, 6).

8. The method according to one of the preceding claims, **characterized in that** the second section (9) of the transport device (7) is configured in the form of a shuttle and is displaced along the rail (3) by means of an oblong pull/push transfer means (20), in particular a transport chain.

9. The method according to one of the preceding claims, **characterized in that** the second section (9) of the transport device (7) comprises a housing (19), in which the first section (8) can be accommodated, in particular while moving the transport device (7) up to the first bending tool (4) of the row.

10. The method according to one of the preceding claims, **characterized in that**, by means of the method, a bending press (1) can be loaded with bending tools (4, 5, 6) and/or bending tools (4, 5, 6) can be removed from a bending press (1).

11. The method according to one of the preceding claims, **characterized in that** the first section (8) can be extended, preferably rolled, out of the second section (9).

12. A loading device (2) for loading a bending press (1) with bending tools (4, 5, 6) and/or for changing bending tools (4, 5, 6) and/or for storing bending tools (4, 5, 6), with a tool mount configured as a rail (3), and a transport device (7) displaceable along the rail (3), **characterized in that** the transport device (7) comprises a first section (8), which can be arranged along a row of bending tools (4, 5, 6) held in the same rail (3), and a second section (9) displaceable along the rail (3), wherein the first section (8) can be moved relative to the second section (9).

13. The loading device according to claim 12, **characterized in that** the loading device (2) is configured to perform a method according to one of claims 1 to 11.

14. The loading device according to claim 12 or 13, **characterized in that** the loading device (2) comprises at least two bending tools (4, 5, 6) held in the rail (3), which bending tools (4, 5, 6) form a row along the rail (3) and each have at least one passage (14, 15, 16), in particular a bore, extending in the longitudinal direction of the rail (3), wherein the passages (14, 15, 16) of the bending tools (4, 5, 6) are aligned with one another, and that the first section (8) of the transport device (7) can be laid through the passages (14, 15, 16) of the bending tools (4, 5, 6) of the row.

15. The loading device according to one of claims 12 to 14, **characterized in that** the first section (8) of the transport device (7) comprises an oblong, preferably flexible pull transfer means.

16. The loading device according to one of claims 12 to 15, **characterized in that** the first section (8) of the transport device (7) comprises a coupling device (10), preferably actuatable by a drive, for coupling to a bending tool (6), wherein the coupling device (10) preferably comprises a spreader device and/or clamping device and/or driver device.

17. The loading device according to claim 16, **characterized in that** the first section (8) of the transport device (7) has two pull and/or push transfer elements (17, 18) displaceable against one another along their longitudinal extension, by means of which the claim (10) can be actuated.

18. The loading device according to one of claims 12 to 17, **characterized in that** the second section (9) of the transport device (7) is configured in the form of a shuttle and can be displaced along the rail (3) by means of an oblong pull/push transfer means (20), in particular a transport chain.

19. The loading device according to one of claims 12 to 18, **characterized in that** the second section (9) of the transport device (7) comprises a housing (19), in which the first section (8) of the transport device (17) can be accommodated.

20. The loading device according to one of claims 12 to 19, **characterized in that** the first section (8) can be extended, preferably rolled, out of the second section (9).

21. A bending press (1) with a tool mount configured as a rail (3) and a transport device (7) displaceable along the rail (3), **characterized in that** the transport device (7) comprises a first section (8), which can be arranged along a row of bending tools (4, 5, 6) held in the same rail (3), and a second section (9) displaceable along the rail (3), wherein the first section (8) can be moved relative to the second section (9).

22. The bending press according to claim 21, **characterized in that** the bending press (1) is configured to carry out a method according to one of claims 1 to 11.

## Revendications

1. Procédé permettant de faire coulisser simultanément au moins deux outils plieuse (4, 5, 6) maintenus dans un rail (3) d'un porte-outil, qui forment, le long du rail (3), une rangée, au moyen d'un dispositif de transport (7), **caractérisé en ce que** le dispositif de transport (7) comprend une première portion (8) et une deuxième portion (9), dans lequel la deuxième portion (9) peut être déplacée par rapport au rail (3) et dans lequel la première portion (8) peut être déplacée par rapport à la deuxième portion (9), et **en ce que** le dispositif de transport (7) est déplacé dans une première direction (11) le long du rail (3) en direction du premier outil de pliage (4) de la rangée et la première portion (8) du dispositif de transport (7) est disposé de façon à s'étendre jusqu'au dernier outil de pliage (6) de la rangée et est couplé au dernier outil de pliage (6) de la rangée et **en ce que** le dispositif de transport (7) est déplacé avec la rangée d'outils plieuse (4, 5, 6) dans une direction (12) opposée à la première direction (11).

2. Procédé selon la revendication 1, **caractérisé en ce que** les outils plieuse (4, 5, 6) de la rangée, maintenus dans le rail (3), comprennent chacun respectivement un passage (14, 15, 16), plus particulièrement un perçage, s'étendant dans la direction longitudinale du rail (3), dans lequel la première portion (8) du dispositif de transport (7) est déplacé à travers les passages (14, 15, 16) des outils plieuse (4, 5, 6) de la rangée au moins jusqu'au dernier outil de pliage (6) de la rangée.

3. Procédé selon la revendication 1 ou 2, **caractérisé en ce que** la première portion (8) du dispositif de transport (7) comprend un moyen de transmission de traction allongé, de préférence flexible.

4. Procédé selon l'une des revendications précédentes, **caractérisé en ce que** la première portion (8) du dispositif de transport (7) comprend un dispositif de couplage (10), pouvant être actionné de préférence par un dispositif d'entraînement, avec lequel le dernier outil de pliage (6) de la rangée est couplé au dispositif de transport (7), dans lequel le dispositif de couplage (10) comprend de préférence un dispositif d'écartement et/ou un dispositif de serrage et/ou un dispositif à élément d'entraînement.

5. Procédé selon l'une des revendications précédentes, **caractérisé en ce que** la première portion (8) du dispositif de transport (7) comprend deux éléments de transmission de traction et/ou de pression (17, 18) coulissant l'un contre l'autre le long de leur extension longitudinale, dans lequel le dispositif de couplage (10) est activé par un coulissement l'un contre l'autre des éléments de transmission de traction et/ou de pression (17, 18).

6. Procédé selon l'une des revendications précédentes, **caractérisé en ce que** le dispositif de transport (7) est guidé dans le même rail (3) que celui où sont maintenus les outils plieuse (4, 5, 6).

7. Procédé selon l'une des revendications précédentes, **caractérisé en ce que** la deuxième portion (9) est déplacée au maximum jusqu'au premier outil de pliage (4), dans lequel la deuxième portion (9) reste hors des outils plieuse (4, 5, 6) et **en ce que** la première portion (8) est ensuite sortie et donc positionnée le long des outils plieuse (4, 5, 6).

8. Procédé selon l'une des revendications précédentes, **caractérisé en ce que** la deuxième portion (9) du dispositif de transport (7) est conçue sous la forme d'une navette et est déplacée, au moyen d'un moyen de transmission de traction/pression allongé (20), plus particulièrement une chaîne de transport, le long du rail (3).

9. Procédé selon l'une des revendications précédentes, **caractérisé en ce que** la deuxième portion (9) du dispositif de transport (7) comprend un boîtier (19) dans lequel la première portion (8) peut être logée, plus particulièrement pendant le déplacement du dispositif de transport (7) vers le premier outil de pliage (4) de la rangée.

10. Procédé selon l'une des revendications précédentes, **caractérisé en ce que**, avec le procédé, une presse plieuse (1) est alimentée avec des outils plieuse (4, 5, 6) et/ou des outils plieuse (4, 5, 6) sont retirés d'une presse plieuse (1).

11. Procédé selon l'une des revendications précédentes, **caractérisé en ce que** la première portion (8) peut être sortie, de préférence roulée, hors de la deuxième portion (9).

12. Dispositif d'alimentation (2) pour l'alimentation d'une presse plieuse (1) avec des outils de pliage (4, 5, 6) et/ou pour le changement d'outils de pliage (4, 5, 6) et/ou pour le logement d'outils de pliage (4, 5, 6), avec un porte-outil conçu sous la forme d'un rail (3) et un dispositif de transport (7) mobile le long du rail (3), **caractérisé en ce que** le dispositif de transport (7) comprend une première portion (8), qui peut être disposée le long d'une rangée d'outils de pliage (4, 5, 6) maintenus dans le même rail (3) et une deuxième portion (9) mobile le long du rail (3), dans lequel la première portion (8) est mobile par rapport à la deuxième portion (9).

13. Dispositif d'alimentation selon la revendication 12, **caractérisé en ce que** le dispositif d'alimentation (2) est conçu pour l'exécution d'un procédé selon l'une des revendications 1 à 11.

14. Dispositif d'alimentation selon la revendication 12 ou 13, **caractérisé en ce que** le dispositif d'alimentation (2) comprend au moins deux outils de pliage (4, 5, 6) maintenus dans le rail (3), qui forment le long du rail (3) une rangée et qui comprennent chacun respectivement un passage (14, 15, 16), plus particulièrement un perçage, s'étendant dans la direction longitudinale du rail (3), dans lequel les passages (14, 15, 16) des outils de pliage (4, 5, 6) sont alignés entre eux et **en ce que** la première portion (8) du dispositif de transport (7) peut être déplacée à travers les passages (14, 15, 16) des outils de pliage (4, 5, 6) de la rangée.

15. Dispositif d'alimentation selon l'une des revendications 12 à 14, **caractérisé en ce que** la première portion (8) du dispositif de transport (7) comprend un moyen de transmission de traction allongé, de préférence flexible.

16. Dispositif d'alimentation selon l'une des revendications 12 à 15, **caractérisé en ce que** la première portion (8) du dispositif de transport (7) comprend un dispositif de couplage (10) pouvant être activé par un dispositif d'entraînement, pour le couplage à un outil de pliage (6), dans lequel le dispositif de couplage (10) comprend de préférence un dispositif d'écartement et/ou un dispositif de serrage et/ou un dispositif à élément d'entraînement.

17. Dispositif d'alimentation selon la revendication 16, **caractérisé en ce que** la première portion (8) du dispositif de transport (7) comprend deux éléments de transmission de traction et/ou de pression (17, 18) coulissant l'un contre l'autre le long de leur extension longitudinale, par lesquels le dispositif de couplage (10) peut être actionné.

18. Dispositif d'alimentation selon l'une des revendications 12 à 17, **caractérisé en ce que** la deuxième portion (9) du dispositif de transport (7) est conçu sous la forme d'une navette et peut être déplacée, au moyen d'un moyen de transmission de traction/pression allongé (20), plus particulièrement une chaîne de transport, le long du rail (3).

19. Dispositif d'alimentation selon l'une des revendications 12 à 18, **caractérisé en ce que** la deuxième portion (9) du dispositif de transport (7) comprend un boîtier (19) dans lequel la première portion (8) du dispositif de transport (17) peut être logée.

20. Dispositif d'alimentation selon l'une des revendications 12 à 19, **caractérisé en ce que** la première portion (8) peut être sortie, de préférence roulée, hors de la deuxième portion (9).

21. Presse plieuse (1) avec un porte-outil conçu sous la forme d'un rail (3) et un dispositif de transport (7) mobile le long du rail (3), **caractérisée en ce que** le dispositif de transport (7) comprend une première portion (8), qui peut être disposées le long d'une rangée d'outils de pliage (4, 5, 6) maintenus dans le même rail (3) et une deuxième portion (9) mobile le long du rail (3), dans lequel la première portion (8) est mobile par rapport à la deuxième portion (9).

22. Presse plieuse selon la revendication 21, **caractérisée en ce que** la presse plieuse (1) est conçue pour l'exécution d'un procédé selon l'une des revendications 1 à 11.
